# EUROPÄISCHE PATENTSCHRIFT

(11) **EP 2 052 889 B1**
(45) Veröffentlichungstag und Bekanntmachung des Hinweises auf die Patenterteilung: **15.06.2016**
(21) Anmeldenummer: 07119441.9
(22) Anmeldetag: 26.10.2007
(51) Int. Cl.: B60G 17/04, F16F 9/06

(54) **Hydropneumatische Feder-Dämpfungsvorrichtung und Verfahren zum Betreiben einer Hydropneumatischen Feder-Dämpfungsvorrichtung**
Hydropneumatic spring-damping device and method of operation of a hydropneumatic spring-damping device
Dispositif hydropneumatique à ressort-amortisseur et procédé de fonctionnement d'un dispositif hydropneumatique à ressort-amortisseur

(43) Veröffentlichungstag der Anmeldung: 29.04.2009
(73) Patentinhaber: Strömsholmen AB, 573 23 Tranås (SE)
(72) Erfinder: Gabriel, Stefan, 8212 Neuhausen am Rheinfall (CH); Kleiber, Michael, 8447 Dachsen (CH); Triebs, Volker, 79793 Wutöschingen (DE); Züllig, Roland, 8215 Hallau (CH)
(74) Vertreter: Awapatent AB

(56) Entgegenhaltungen:
- EP-A- 1 559 596
- WO-A-88/00535
- DE-A1- 1 655 981
- DE-A1- 19 648 050
- DE-A1- 19 935 931
- JP-A- 2000 062 427
- JP-A- 2007 030 660
- US-B1- 6 170 621

## Beschreibung

Die Erfindung betrifft eine hydropneumatische Feder-Dämpfungsvorrichtung gemäss dem Oberbegriff von Anspruch 1. Die Erfindung betrifft weiter ein Verfahren zum Betreiben einer hydropneumatischen Feder-Dämpfungsvorrichtung gemäss dem Oberbegriff von Anspruch 15.

Eine hydropneumatische Feder-Dämpfungsvorrichtung umfasst im Allgemeinen ein Gasvolumen und ein Flüssigkeitsvolumen, die über einen Trennkolben in einer festen Gehäusekombination aufgenommen sind. Die hydropneumatische Feder-Dämpfungsvorrichtung umfasst drei Kammern. Eine erste Kammer ist für die Aufnahme von Flüssigkeitsvolumen bestimmt. Dieses Flüssigkeitsvolumen ist veränderbar, indem Gehäuseteile in irgendeiner Art und Weise zusammengeschoben oder auseinandergeschoben werden. Eine zweite Kammer ist mit der ersten Kammer über eine Drossel fluidleitend verbunden. Die zweite Kammer ist für die Aufnahme bzw. Abgabe der Flüssigkeit von bzw. an die erste Kammer vorgesehen. Das Flüssigkeitsvolumen der ersten Kammer und der zweiten Kammer zusammen ist konstant. Die dritte Kammer ist mit einem komprimierbaren Medium, wie zum Beispiel Gas, gefüllt. Die dritte Kammer ist durch ein Trennelement, beispielsweise einem beweglichen Kolben oder einer Membrane von der zweiten Kammer getrennt.

Die hydropneumatische Feder-Dämpfungsvorrichtung ist beispielsweise einerseits am Rahmen eines Fahrzeuges und andererseits an einer beweglichen Achse oder einer beweglichen Radaufhängung befestigbar. Eine Bewegung zwischen den beiden Befestigungspunkten bewirkt eine Volumenänderung der ersten Kammer. Dadurch wird das Medium in der dritten Kammer über die zweite Kammer komprimiert bzw. dekomprimiert. Dies bewirkt eine Ein- oder Ausfederung. Die Bewegung wird insbesondere durch das über die Drossel fliessende Fluid gedämpft, indem das Fluid über die Drossel zwischen der ersten Kammer und der zweiten Kammer hin-und herströmt. Eine derartige hydropneumatische Feder-Dämpfungsvorrichtung wird auch als Hydropfeder oder Hydropelement bezeichnet. Nachfolgend wird der Begriff Hydropelement verwendet.

Nachteilig an mit Hydropelementen ausgestatteten Fahrzeugen ist die Tatsache, dass sich das Federungsverhalten der einzelnen Hydropelemente auf Grund von Umwelteinflüssen wie Temperaturänderungen oder unterschiedlichen Betriebszuständen verändern kann, auch während des Betriebs, was zur Folge hat, dass sich zum Beispiel das Fahrverhalten und/oder die Fahrzeughöhe des Fahrzeuges verändern kann. Diese Effekte treten insbesondere bei geländegängigen Fahrzeugen auf, bei welchen die Hydropelemente auf Grund der Unebenheiten des Untergrundes einer besonders starken Belastung ausgesetzt sind. Besonders nachteilig wirken sich diese Effekte bei mit Hydropelementen ausgerüsteten Kettenfahrzeugen aus, weil diese Effekte zudem noch die Spannung der Kette beeinflussen. Die Veränderung der Kettspannung kann bei Überhöhung der Kettspannung einen erhöhten Verschleiss der Kette zur Folge haben, oder bei zu loser Kette die Ursache für einen Kettenabwurf oder eine Nichtlenkbarkeit bzw. eine Nichtbremsbarkeit des Fahrzeuges sein.

Die Druckschrift WO2005/073001 offenbart ein Hydropelement, welches gewisse Umwelteinflüsse zumindest vorübergehend zu kompensieren erlaubt. Nachteilig an diesem Hydropelement ist die Tatsache, dass diese Kompensation wiederholt durchgeführt werden muss, und dass zudem eine relativ aufwendige Dosiervorrichtung erforderlich ist. Die Offenbarung der Druckschrift WO2005/073001 wird hiermit durch Referenzierung aufgenommen.

Die Druckschrift DE 196 48 050 A1 offenbart eine Hydraulikdruckquelleneinrichtung zur Fahrzeughöhen-Steuerung. Dabei wird die Fahrzeughöhe angesteuert indem einem Hydraulikbetätigungselement ein unter Druck stehendes Fluid zugeführt wird, wobei der Druck des Fluides unter Verwendung von Abwärme eines Fahrzeugmotors gesteuert wird, indem heisses Wasser des Fahrzeugmotors einer Heizvorrichtung zugeführt wird, welche sich innerhalb einer Druckerzeugungskammer befindet, sodass der Druck des sich innerhalb der Druckerzeugungskammer befindlichen Fluides ansteigt, was es ermöglicht die Fahrzeughöhe anzusteuern. Diese Einrichtung lässt nur eine sehr beschränkte Ansteuerung zu.

Weitere elemente hydropneumatische Feder-Dämpfervorrichtungen sind aus den JP2007030660A, DE1655981A, DE 199 35 931 und JP 2000 062427A bekannt.

Es ist daher die Aufgabe der vorliegenden Erfindung eine hydropneumatische Feder-Dämpfungsvorrichtung sowie ein Verfahren zum Betrieb einer hydropneumatischen Feder-Dämpfungsvorrichtung vorzuschlagen, die ein vorteilhafteres Hydropelement aufweisen.

Diese Aufgabe wird gelöst mit einer hydropneumatischen Feder-Dämpfungsvorrichtung aufweisend die Merkmale von Anspruch 1. Die Aufgabe wird weiter gelöst mit einem Verfahren zum Betrieb einer hydropneumatischen Feder-Dämpfungsvorrichtung aufweisend die Merkmale von Anspruch 15. Vorteilhafte Ausführungsformen ergeben sich aus den Unteransprüchen.

Diese Aufgabe wird insbesondere gelöst mit einer hydropneumatischen Feder-Dämpfungsvorrichtung umfassend zumindest ein Hydropelement mit einer Gaskammer, wobei das Hydropelement einen Wärmetauscher umfasst, welcher derart angeordnet ist, dass dieser die Temperatur des Gases in der Gaskammer beeinflusst, wobei der Wärmetauscher über einen Kühlkreislauf mit einer Kühlvorrichtung verbunden ist.

In einer besonders vorteilhaften Ausgestaltung ist die Gaskammer und/oder die Kammer enthaltend das Flüssigkeitsvolumen mit einer Wärmetauscher verbunden, welcher beispielsweise an der Aussenwand der Kammer angeordnet ist, oder innerhalb der Kammer verlaufend angeordnet ist. Falls der Wärmetauscher direkt an der Gaskammer angeordnet ist, so kann dieser Gaskammer mit Hilfe des Wärmetauschers direkt Wärme entzogen werden. Falls der Wärmetauscher nur an der Kammer des Flüssigkeitsvolumens angeordnet ist, so entzieht der Wärmetauscher der Flüssigkeit Wärme, was wiederum zur Folge hat, dass die Temperatur des Gases in der Gaskammer beeinflusst wird, und insbesondere gekühlt wird.

Wenn ein mit Hydropelementen ausgestattetes Fahrzeug über ein unebenes Gelände fährt, so hat dies zur Folge, dass die Hydropelemente relativ rasch und gegebenenfalls auch mit langen Federwegen ausgelenkt, das heisst verlängert und verkürzt werden. Diese Bewegung der Hydropelemente hat zur Folge, dass sich die Hydropelemente auf eine aktuelle Betriebstemperatur erwärmen, insbesondere auf Grund der am Hydropelement entstehenden Reibungswärme und/oder der an der Drossel entstehenden Dämpfungswärme. Zudem hat der während dem Ein- und Ausfedern des Hydropelementes auftretende Energieaustausch im Gas der Gaskammer zur Folge, dass die Flüssigkeit und insbesondere jedoch das Gas in dem Hydropelement einer ständigen, raschen Temperaturschwankung unterliegt, die der aktuellen Betriebstemperatur überlagert ist. Diese raschen Temperaturschwankungen können die aktuelle Betriebstemperatur des Hydropelementes, beispielsweise die Temperatur des Gehäuses des Hydropelementes, zusätzlich beeinflussen. Der auf das Hydropelement wirkende Wärmetauscher kombiniert mit der Kühlvorrichtung hat zur Folge, dass die aktuelle Betriebstemperatur reduziert wird, was zur Folge hat, dass die Temperatur des Gasvolumens reduziert wird, und somit das Hydropelement in einem definierten Betriebszustand gehalten wird, beziehungsweise dass die Temperatur des Gases in der Gaskammer in einem vorherbestimmten Temperaturbereich gehalten wird.

Die aktuelle Betriebstemperatur des Hydropelementes wird bestimmt durch diejenigen Vorgänge, welche dem Hydropelement Wärme zuführen und diejenigen Vorgänge, welche dem Hydropelement Wärme entziehen. Die aktuelle Betriebstemperatur, z.B. die am Gehäuse der Gaskammer gemessene Temperatur, stellt sich somit ein auf Grund derjenigen thermischen Vorgänge, die einen bleibenden Energieeintrag bzw. einen bleibenden Energieentzug am Hydropelement bewirken. Innerhalb der Gaskammer weist das Gas eine Gastemperatur auf, welche bei aktiv bewegtem Hydropelement einer ständigen, raschen Temperaturschwankung unterliegt, wobei die bewegungsbedingte Temperaturschwankung üblicherweise um den Wert der aktuellen Betriebstemperatur schwankt, beziehungsweise der aktuellen Betriebstemperatur überlagert ist.

In einer Ausführungsform ist der Kühlkreislauf als passives System ausgestaltet. In einer besonders bevorzugten Ausgestaltung ist der Kühlkreislauf als ein aktiv gesteuerter Kühlkreislauf ausgestaltet, umfassend eine Fluidpumpe, einen Temperatursensor und eine Ansteuerungsvorrichtung, welche die Temperatur des Sensors misst, und die Fluidpumpe derart ansteuert, dass die aktuelle Betriebstemperatur, vorzugsweise die aktuelle Betriebstemperatur des Gases in der Gaskammer, innerhalb eines vorherbestimmten Betriebstemperaturbereiches von beispielsweise 80°C bis 100°C gehalten wird. Als Fluid ist insbesondere Wasser geeignet. Als Fluid sind jedoch auch andere Flüssigkeiten wie zum Beispiel Öl oder auch Gase geeignet.

In einer vorteilhaften Ausgestaltung ist der Kühlkreislauf derart ausgestaltet, dass jedes Hydropelement individuell kühlbar ist. Der Kühlkreislauf kann jedoch auch derart ausgestaltet sein, dass die Hydropelemente seriell nacheinander mit demselben Kühlkreislauf verbunden sind, sodass die Hydropelemente seriell nacheinander vom Kühlmittel durchflossen sind. Diese Anordnung weist den Vorteil auf, dass zwischen den nacheinander geschalteten Hydropelemente ein gegenseitiger Temperaturaustausch stattfindet. Angenommen ein Fahrzeug weist auf der einen Fahrzeugseite vier hintereinander angeordnete Fahrzeugräder bzw. Laufrollen auf, welche über je ein Hydropelement mit dem Fahrzeugkasten verbunden sind. Je nach Anordnung, Ausgestaltung und befahrenem Gelände kann diese Anordnung zur Folge haben, dass das in Fahrtrichtung zuvorderst angeordnete Hydropelement die höchste Dämpfungsleistung zu erbringen hat und somit auch die höchste Wärmebelastung beziehungsweise die höchste Wärmeenergiezufuhr erfährt, wogegen die nachgeordneten Hydropelementen auf Grund der erwartungsgemässen geringeren Auslenkung der Radbewegungen eine vergleichsweise geringere Erwärmung erfahren. Der Kühlkreislauf, welcher die Hydropelemente seriell nacheinander verbindet, weist den Vorteil auf, dass zwischen den Hydropelementen ein Temperaturaustausch beziehungsweise ein Wärmeenergieaustausch stattfindet. Fliesst das Kühlmittel beispielweise von dem in Fahrtrichtung zuhinterst angeordneten Hydropelement über die nachfolgend angeordneten Hydropelemente bis zu dem in Fahrtrichtung vordersten Hydropelement, so wird das vorderste Hydropelement durch die hinteren Hydropelemente gekühlt. In einer Ausführungsform könnte auch auf eine separate Kühlvorrichtung verzichtet werden, weil gewisse der in Serie geschalteten Hydropelemente kühler sind als andere, und somit gewisse Hydropelemente als Kühlvorrichtung wirken.

Der Kühlkreislauf kann in einer Vielzahl von Möglichkeiten ausgestaltet sein um Hydropelemente zu kühlen. Die Hydropelemente können einzeln, seriell nacheinander oder gegenseitig parallel mit dem Kühlkreislauf verbunden sein. Zudem können die Hydropelemente auch in Gruppen seriell oder parallel verbunden sein, und diese Gruppen wiederum einzeln, seriell nacheinander oder gegenseitig parallel mit dem Kühlkreislauf verbunden sein.

Die Kühlvorrichtung kann als eine separate Kühlvorrichtung ausgestaltet sein, welche die Wärme vorzugsweise direkt mit der Umgebungsluft austauscht. In einer besonders bevorzugten Ausführungsform ist der Kühlkreislauf der Hydropelemente jedoch mit der Kühlvorrichtung des Fahrzeuges verbunden, sodass die Hydropelemente beispielweise direkt mit Kühlwasser des Kühlers des Fahrzeuges durchströmt sind. Die Motorkühlung des Fahrzeuges ist vorzugsweise derart dimensioniert, dass deren Kühlleistung zumindest so gross ist wie die zum Kühlen des Motors sowie der Hydropelemente erforderliche Kühlleistung. Üblicherweise sind die Fahrzeuge jedoch mit einem sehr leistungsfähigen Motor versehen, sodass dieser Motor eine Kühlleistung aufweist, welche wesentlich grösser ist als die zum Kühlen der Hydropelemente erforderliche Kühlleistung. Der Motorkühler des Fahrzeuges weist beispielsweise eine Kühlleistung auf, welche zumindest 5 mal so gross ist wie die gesamte, von der hydropneumatischen Feder-Dämpfungsvorrichtung erzeugbare Wärmeleistung. In einer besonders vorteilhaften Anordnung weist der Motorkühler des Fahrzeuges eine zumindest 20 mal grössere oder sogar eine zumindest 100 mal grössere Kühlleistung auf, als die von allen Hydropelementen erzeugte Wärmeleistung. Eine grosse Kühlleistung des Fahrzeuges weist den Vorteil auf, dass die zum Kühlen der Hydropelemente erforderliche Kühlleistung vergleichsweise gering ist, sodass gewährleistet ist, dass die Hydropelemente auf einer vorgesehenen Betriebstemperatur gehalten werden können.

Die Erfindung wird nachfolgend an Hand mehrerer Ausführungsbeispiele im Detail beschrieben. Es zeigen:
- Figur 1: eine schematische Ansicht eines Hydropelementes, welches mit einer Kühlvorrichtung verbunden ist;
- Figur 2: eine schematische Ansicht eines Hydropelementes, welches mit einem geregelten Kühlkreislauf verbunden ist;
- Figur 3: eine schematische Ansicht eines weiteren, gekühlten Hydropelementes;
- Figur 4: eine schematische Ansicht eines weiteren, gekühlten Hydropelementes;
- Figur 5: eine schematische Ansicht einer hydropneumatischen Feder-Dämpfungsvorrichtung eines Fahrzeuges mit einer Mehrzahl von Einzelrädern, welchen je ein Hydropelement zugeordnet ist, wobei jedes Hydropelement individuell kühlbar ist;
- Figur 6: eine schematische Ansicht einer hydropneumatischen Feder-Dämpfungsvorrichtung eines Fahrzeuges mit einer Mehrzahl von Einzelrädern, welchen je ein Hydropelement zugeordnet ist, wobei die Hydropelemente in Serieschaltung kühlbar sind;
- Figur 7: eine schematische Ansicht eines aus dem Stand der Technik bekannten Hydropelementes mit Dosierzylinder und Ansteuerungsvorrichtung;
- Figur 8: eine schematische Ansicht einer aus dem Stand der Technik bekannten hydropneumatischen Feder-Dämpfungsvorrichtung einen Fahrzeuges mit einer Mehrzahl von Einzelrändern;
- Figur 9: eine schematische Ansicht eines aus dem Stand der Technik bekannten Kettenfahrzeuges mit zwei Hydropelementen;
- Figur 10: eine schematische Draufsicht auf ein Federmodul eines Kettenfahrzeuges mit zwei ansteuerbaren Hydropelementen;
- Figur 11: ein Ausführungsbeispiel einem Hydropelement.
- Figur 12: der Zusammenhang zwischen der Länge eines Hydropelementes und dem Druck in deren Gaskammer bei einer Referenztemperaturen und weiteren Temperaturen;
- Figur 13: eine schematische Ansicht eines Hydropelementes mit Dosierzylinder und Ansteuerungsvorrichtung.

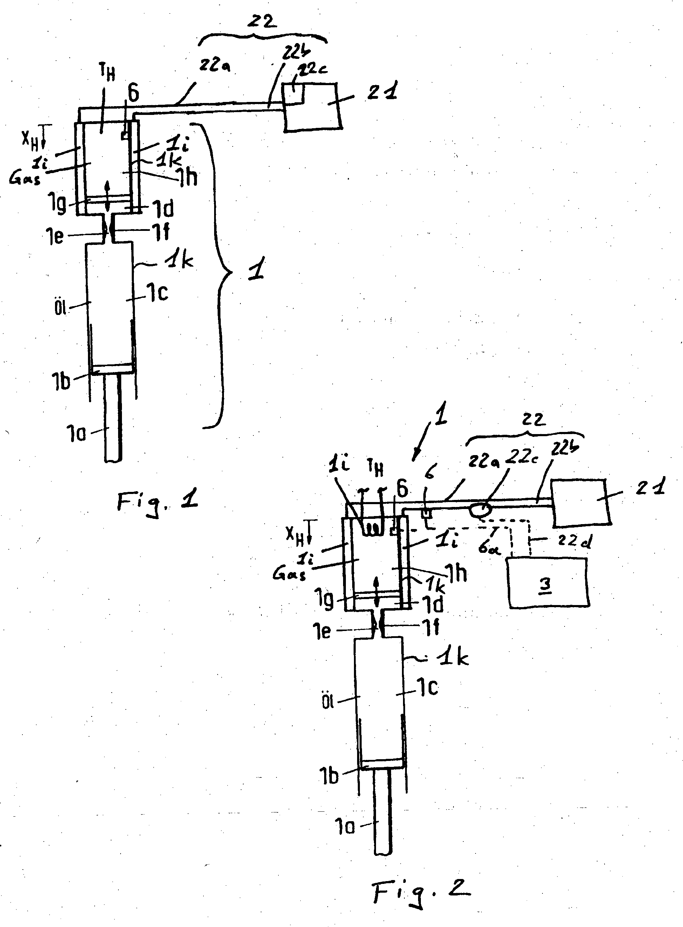

Die in Figur 1 schematisch dargestellte hydropneumatische Feder-Dämpfungsvorrichtung umfasst ein Hydropelement 1. Das vereinfacht dargestellte Hydropelement 1 umfasst ein vertikal verschiebbares Verbindungsmittel 1a, an dessen unterem Ende ein nicht dargestelltes Rad bzw. Radhalterung befestigt ist. Das Verbindungsmittel 1a ist fest mit einem verschiebbar gelagerten Kolben 1b mit Gehäuseteil verbunden, wobei der Kolben 1b mit Gehäuseteil sowie das feste Gehäuse 1k des Hydropelementes 1 ein Flüssigkeitsvolumen begrenzen, welches ein erstes Teilvolumen 1c sowie ein zweites Teilvolumen 1 d aufweist. Das erste Teilvolumen 1 c wird auch als erste Kammer, das zweite Teilvolumen 1d als zweite Kammer bezeichnet. Das erste und zweite Teilvolumen 1c,1d sind über eine Ausgleichsleitung 1e mit Drossel 1f Fluid leitend verbunden. Das Flüssigkeitsvolumen ist vorzugsweise mit Öl gefüllt. Ein Gasvolumen 1h, auch als dritte Kammer bezeichnet, ist durch das feste Gehäuse 1k des Hydropelementes 1 und einem Trennkolben 1g begrenzt, wobei der verschiebbare Trennkolben 1g das zweite Teilvolumen 1d sowie die Gaskammer 1h begrenzt. Im dargestellten Ausführungsbeispiel ist das obere, feste Gehäuse 1k von einem Wärmetauscher 1i umgeben, um die Oberfläche des Gehäuses 1k zu kühlen und dadurch Wärme aus der Gaskammer 1h und aus der zweiten Ölkammer 1d abzuführen. Der Wärmetauscher ist über einen Kühlkreislauf 22, umfassend Kühlmittelleitungen 22a, 22b und eventuell umfassend eine Umwälzvorrichtung 22c, mit einer Kühlvorrichtung 21 verbunden. In der einfachen Ausführungsform weist der Kühlkreislauf 22 keine aktive Umwälzvorrichtung 22c auf, sodass die Strömung des Fluides im Kühlkreislauf 22 durch rein passive Konvektion erfolgt. In einer bevorzugteren Ausführungsform umfasst der Kühlkreislauf 22 eine aktive Umwälzvorrichtung 22c, beispielweise eine ständig laufende Pumpe 22c. In einer vorteilhaften Ausgestaltung ist der Kühlkreislauf 22 mit dem Kühlkreislauf des Fahrzeuges verbunden, sodass beispielsweise Kühlwasser der Fahrzeugkühlung entweder direkt, oder über einen zusätzlichen zwischengeschalteten Wärmetauscher entkoppelt, den Kühlkreislauf 22 durchströmt. In einer weiteren vorteilhaften Ausgestaltung könnte im Kühlkreislauf 22 ein mechanisches Ventil aufweisend einen Temperatursensor angeordnet sein, wobei das Ventil den Durchfluss des Kühlwassers selbsttätig in Abhängigkeit der Temperatur regelt. Als Temperatursensor könnte zum Beispiel ein Bimetall verwendet werden, welches beispielsweise die Temperatur des aus dem Wärmetauscher 1i rückströmenden Kühlwassers erfasst, und durch dessen Auslenkung den Durchfluss des mechanischen Ventils entsprechend verändert. Das mechanische Ventil könnte auch als ein Mischventil ausgestaltet sein, dem Kühlwasser mit zwei unterschiedlichen Temperaturen zugeführt ist. Dieses rein mechanisch arbeitende Ventil mit mechanischem Temperatursensor kann in einer Vielzahl von Möglichkeiten ausgestaltet sein.

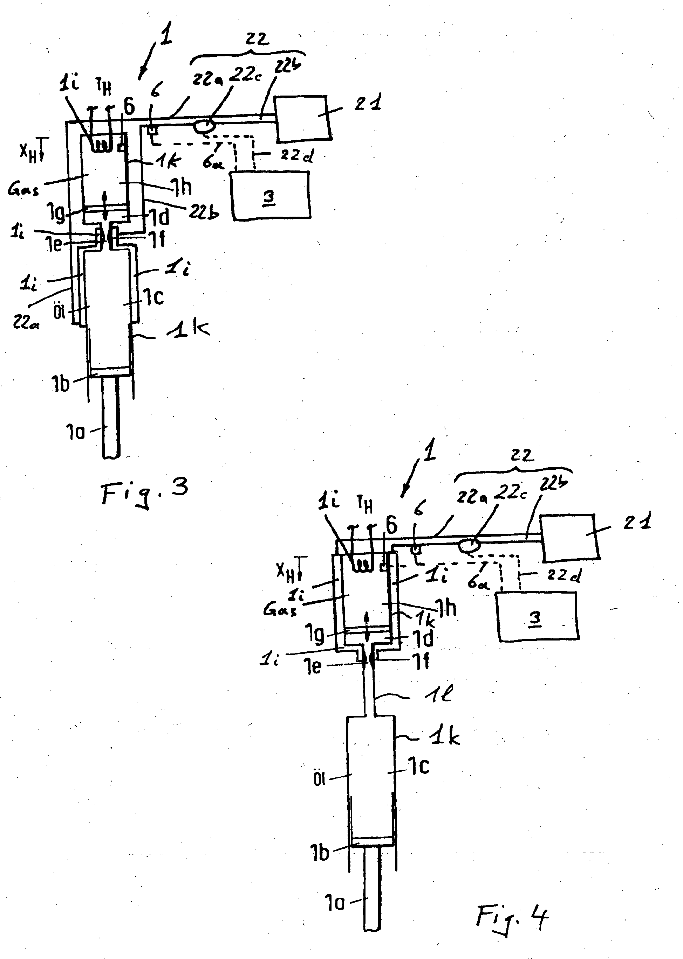

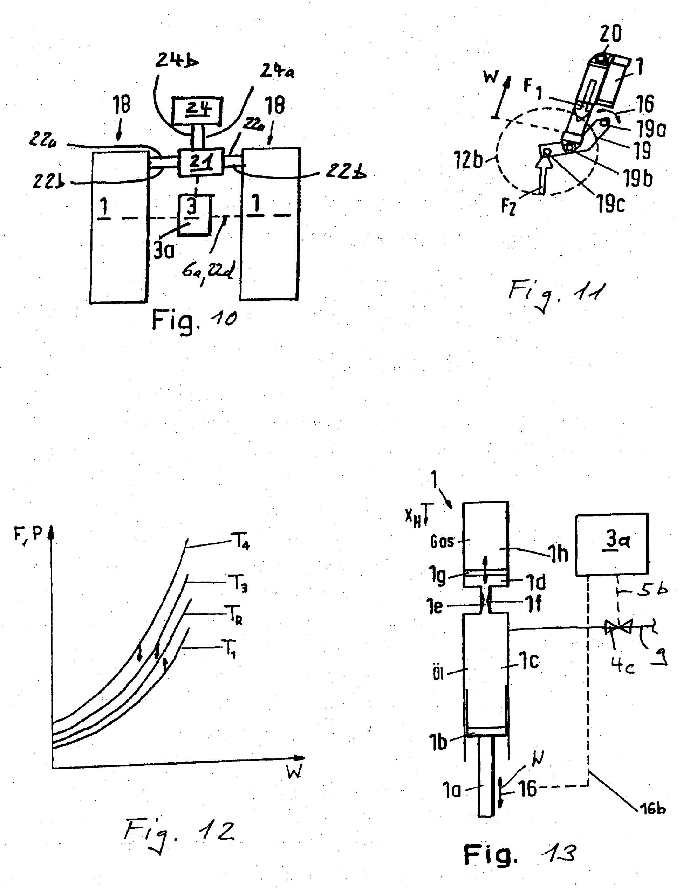

Vorzugsweise weist die Fahrzeugkühlung eine wesentlich höhere Kühlleistung auf als die vom Hydropelement erzeugte Wärmeleistung, was zur Folge hat, dass der Wärmetauscher li und somit auch das Gas in der Gaskammer 1h in einem im Wesentlichen durch die Fahrzeugkühlung bestimmten mittleren Temperaturbereich gehalten wird. Diese Anordnung weist den zusätzlichen Vorteil auf, dass die Fahrzeugkühlung üblicherweise bereits eine Temperaturregelung aufweist, welche die Temperatur des Kühlwassers in einem üblicherweise vorherbestimmten Temperaturbereich hält. Durch die Verwendung des Kühlwassers der Fahrzeugkühlung steht auch dem Hydropelement 1 ein Kühlwasser mit einer im Wesentlichen vorherbestimmten Temperatur zur Verfügung. Durch die Verwendung der Fahrzeugkühlung ist daher in einer vorteilhaften Ausgestaltung keine aufwendige, separate Kühlvorrichtung zur Kühlung der Hydropelemente 1 erforderlich. Diese Anordnung weist zudem den Vorteil auf, dass beim Starten des Fahrzeuges dem Wärmetauscher 1i erwärmtes Kühlwasser zugeführt werden kann, sodass das Gas in der Gaskammer 1h, falls erforderlich, bereits während dem Starten und Warmlaufen des Fahrzeuges auf eine insbesondere vorherbestimmte, aktuelle Betriebstemperatur beziehungsweise die Referenztemperatur TR erwärmt werden kann. Diese Ausgestaltung mit Erwärmung des Hydropelementes weist den Vorteil auf, dass das Hydropelement 1 sehr bald nach dem Starten des Fahrzeuges eine wie in Figur 12 dargestellte, definierte, der Temperatur TR zugeordneten Federkennlinie aufweist, da das Hydropelement 1 auf Grund des Kühlkreislaufes eine im Wesentlichen konstante oder in einem vorgegebenen, engen Temperaturbereich liegende Betriebstemperatur, und Idealerweise eine relativ konstante Referenztemperatur TR aufweist. Anstelle oder zusätzlich zum oberen festen Gehäuse 1k könnte, wie in Figur 3 dargestellt, auch das untere feste Gehäuse 1k, d.h. die erste Ölkammer 1c und/oder die Drossel 1f vom Kühlkreislauf 22 gekühlt werden. Das Hydropelement 1 könnte, falls zum Beispiel zur Überwachung erforderlich, zusätzlich mit einem Sensoren wie einem Temperatursensor 6 versehen sein, welcher mit einer nicht dargestellten Anzeige- oder Regelungsvorrichtung 3 verbunden ist.

Figur 2 zeigt ein Hydropelement 1, welche im Unterschied zu der in Figur 1 dargestellten Ausführungsform, einen aktiv geregelten Kühlkreislauf 22 aufweist, indem mit einem Temperatursensor 6 eine Temperatur gemessen wird, z.B. wie dargestellt die Temperatur in der Gaskammer 1h und/oder die Temperatur der Kühlmittelleitung 22a,22b. Diese gemessene Temperatur wird über eine Signalleitung 6a einer Ansteuerungs- und/oder Regelungsvorrichtung 3 zugeführt, welche über eine Signalleitung 22d die Umwälzvorrichtung 22c ansteuert. In einer bevorzugten Ausgestaltung wird die Umwälzvorrichtung 22c derart angesteuert, dass die mit dem Temperatursensor 6 gemessene Temperatur während des Betriebs des Fahrzeuges im Wesentlichen konstant ist. Die Regelungsvörrichtung 3 könnte auch Teil des Motors des Fahrzeuges sein, und die Kühlvorrichtung 21 sowie die Umwälzvorrichtung 22c Teil der Motorkühlung.

Der Wärmetauscher 1i kann in einer Mehrzahl von Möglichkeiten derart am Hydropelement 1 angeordnet sein, dass sich ein Wärmeaustausch ergibt. Der Wärmetauscher 1i könnte beispielsweise auch wie dargestellt als Fluid durchflossene Spirale ausgestaltet sein, welche auch im Innenraum des Gaskammer 1h verläuft. Dieser Wärmetauscher 1i ermöglicht nicht nur eine Kühlung des Innenraumes der Gaskammer 1h, sondern kann auch, wie bereits oben im Zusammenhang mit Figur 1 beschrieben, den Innenraum der Gaskammer 1h zu erwärmen, insbesondere während dem Starten bzw. Warmlaufen des Fahrzeuges, insbesondere am frühen Morgen, wenn das Fahrzeug auf Grund der vorhergehenden Nacht abgekühlt ist, und das Gas in der Gaskammer 1h deshalb eine tiefe, wesentlich unter der üblichen Betriebstemperatur TR liegende Temperatur aufweist. Zum Erwärmen des sich im Innenraum der Gaskammer 1h befindlichen Gases kann auch eine Heizvorrichtung, insbesondere eine elektrische Heizvorrichtung vorgesehen sein. Die in Figur 2 dargestellte Spirale 1i könnte beispielsweise als elektrische Heizvorrichtung zur Erwärmung des Gases ausgestaltet sein.

Bei der in Figur 3 dargestellten Feder-Dämpfungsvorrichtung ist, im Unterschied zu der in Figur 2 dargestellten Ausführungsform, einzig die erste Ölkammer 1c und die Drossel 1f mit einem Wärmetauscher 1i versehen. Durch das dadurch bewirkte Kühlen des Öls kann die Temperatur des Gases in der Gaskammer 1h ebenfalls beeinflusst werden. Die Drossel 1f kann als passives Element oder auch als eine aktiv beeinflussbare oder aktiv ansteuerbare Drossel 1f ausgestaltet sein. Die Drossel 1f dient zur Dämpfung des zwischen dem ersten Ölkammerteil 1c und dem zweiten Ölkammerteil 1d hin und her fliessenden Fluides, weshalb insbesondere bei einem schnell ausgelenkten Hydropelement an der Drossel 1f eine hohe Wärmeleistung freigesetzt wird, welche vorzugsweise direkt von einem an der Drossel 1f angeordneten Wärmetauscher 1i abgeführt wird.

Die in Figur 4 dargestellte Feder-Dämpfungsvorrichtung weist ein Hydropelement 1 auf, dessen erstes und zweites Ölkammerteil 1c, 1d über eine längere Verbindungsleitung 11 miteinander verbunden sind. Die Drossel 1f kann im Bereich des ersten oder zweiten Ölkammerteils 1c, 1d angeordnet sein. Das in Figur 4 dargestellte Hydropelement 1 weist den Vorteil auf, dass das erste und zweite Ölkammerteil 1c, 1d voneinander beabstandet angeordnet werden können, auch relativ weit, ohne dass dadurch die Betriebseigenschaften des Hydropelementes 1 verändert werden. Ein derart ausgestaltetes Hydropelement 1 weist den Vorteil auf, dass beispielsweise nur das erste Ölkammerteil 1c, der bewegliche Kolben 1b sowie das Verbindungsmittel 1a ausserhalb an einem Fahrzeug angeordnet werden müssen, wogegen die restlichen in Figur 4 dargestellten Elemente auch innerhalb des Fahrzeuges angeordnet sein könnten.

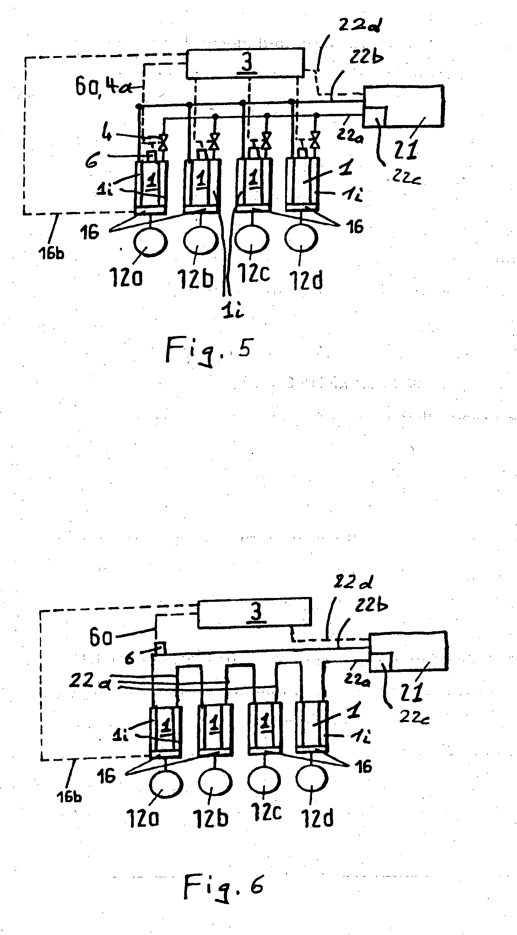

Figur 5 zeigt schematisch eine hydropneumatische Feder-Dämpfungsvorrichtung eines Fahrzeuges mit vier Hydropelementen 1. Jedes Hydropelement 1 umfasst einen Wärmetauscher 1i, einen Temperatursensor 6, und optional einen Sensor 16 zur Positionsbestimmung, vorzugsweise ein Lagen- beziehungsweise ein Längensensor, sowie ein dem jeweiligen Hydropelement 1 zugeordnetes Ventil 4. Mit dem Sensor 16 zur Positionsbestimmung kann beispielsweise die Länge des Hydropelementes 1 oder beispielsweise die Höhe des Fahrzeuges ab Boden gemessen werden. Der Sensor 16 zur Positionsbestimmung kann in einer Vielzahl von Möglichkeiten ausgestaltet sein, um die Position oder Lage des Fahrzeuges und/oder die Position eines Hydropelementes, beispielsweise dessen Länge oder dessen Auslenkung zu messen. Da sich eine Veränderung der Länge des Hydropelementes 1 sofort auch die Lage, z.B. die Höhe des Fahrzeuges über Grund, oder die Neigung des Fahrzeuges auswirkt, kann die Lage beziehungsweise die Position des Fahrzeuges mit einer Vielzahl von Möglichkeiten gemessen werden, und daraus ein Rückschluss auf den Zustand des Hydropelementes, insbesondere auf dessen Länge oder Auslenkung, abgeleitet werden. Der Kühlkreislauf 22, welcher mit der Kühlvorrichtung 21 verbunden ist, umfasst die Kühlmittelleitungen 22a, 22b sowie die Umwälzvorrichtung 22c. Die Ansteuerungsvorrichtung 3 ist über elektrische Signalleitungen 4a, 6a, 16b, und 22d mit den Ventilen 4, den Temperatursensoren 6, der Umwälzvorrichtung 22c sowie den optionalen Sensor 16 zur Positionsbestimmung verbunden. Im dargestellten Ausführungsbeispiel kann der Wärmetauscher 1i jedes Hydropelementes 1 über das Ventil 4 individuell und ansteuerbar mit Kühlmittel versorgt werden, sodass die Temperatur jedes einzelnen Hydropelementes 1 individuell eingestellt werden kann, und insbesondere innerhalb eines vorherbestimmten Temperaturbereiches von beispielsweise TR +/- 10 °C oder auf einer vorherbestimmten Temperatur TR gehalten werden kann. Der Sensor 16 zur Positionsbestimmung dient zum Beispiel dazu die Stellung des Hydropelementes 1 nach dem Abkühlen, zum Beispiel am frühen Morgen, zu erfassen. Zum Kühlen an sich ist der Sensor 16 zur Positionsbestimmung jedoch nicht erforderlich. Dazu genügt der Temperatursensor 6 sowie das ansteuerbare Ventil 4. Auf ein ansteuerbares Ventil 4 könnte auch verzichtet werden, indem dieses durch ein mechanisches Ventil aufweisend einen Temperatursensor, z.B. ein Bimetall ersetzt wird, wobei der Temperatursensor beispielsweise die Temperatur des aus dem Wärmetauscher ausströmenden Kühlwassers misst, und das Ventil die Wassermenge ansteuert. Bei dieser rein mechanischen Lösung eines Ventils mit integriertem Temperatursensor könnte auf die elektrischen Signalleitungen 4a, 6a verzichtet werden.

Figur 6 zeigt ein weiteres Ausführungsbeispiel einer hydropneumatischen Feder-Dämpfungsvorrichtung eines Fahrzeuges mit vier Hydropelementen 1, welche im Unterschied zu der in Figur 5 dargestellten Anordnung derart in Serie geschaltet sind, dass die Hydropelemente 1 nacheinander von derselben Kühlflüssigkeit durchströmt sind. Im dargestellten Ausführungsbeispiel wird mit einem Temperatursensor 6 die Temperatur des Kühlwassers in der Kühlmittelleitung 22b gemessen. Die Ansteuerungs- und/oder Regelungsvorrichtung ist wiederum mit dem Temperatursensor 6 verbunden und steuert die Umwälzvorrichtung 22c vorzugsweise derart an, dass die Temperatur des Kühlwasser auf einer im wesentlichen vorgegebenen, konstanten Temperatur TR gehalten wird.

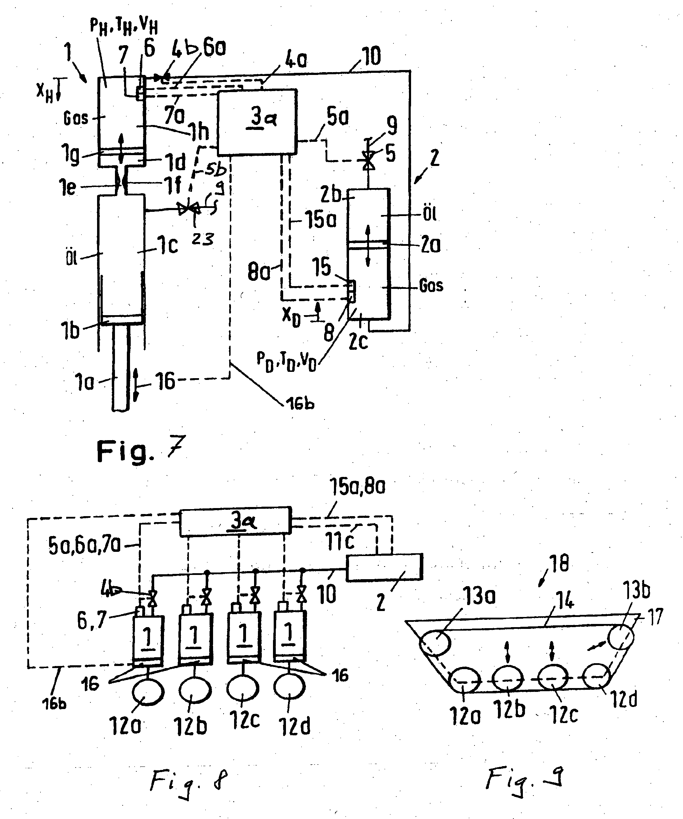

Die Figuren 7, 8 und 9 offenbaren eine von demselben Patentanmelder bereits in der Druckschrift WO 2005/073001 offenbarte Anordnung zum Zu- oder Abführen einer Menge Gas in den Innenraum der Gaskammer 1h. Es kann sich als vorteilhaft erweisen, diese Anordnung in Kombination mit der in den Figuren 1 bis 6 dargestellten Anordnung zu verwenden. Die Figuren 7, 8 und 9 zeigen eine Anordnung welche zum Zu- oder Abführen einer Menge Gas in den Innenraum der Gaskammer 1h dient. Die Figuren 1 bis 6 zeigen eine Anordnung welche zum Kühlen oder Erwärmen des Gases in der Gaskammer 1h dient. Es kann sich als vorteilhaft erweisen beide an sich gegenseitig unabhängigen Verfahren bzw. Anordnungen zu verwenden, indem zum Beispiel am frühen Morgen bei kalten Hydropelementen dem Hydropelement 1 zuerst eine Menge Gas zugeführt wird, um dadurch wie in Figur 12 beispielsweise mit T1 dargestellt, die Federkennlinien des Hydropelementes 1 von T1 nach TR zu korrigierten oder im umgekehrten Fall eine Gasmenge zu entnehmen um von T4 nach TR zu korrigieren. Nach dem Zuführen der Menge Gas könnte das Hydropelement 1 wie mit Hilfe der Figuren 1 bis 6 beschrieben, gekühlt und/oder erwärmt werden. Falls erforderlich kann das Hydropelement 1 jederzeit eine Menge Gas zu-oder abgeführt werden, insbesondere da die Anordnung gemäss Figur 5 und 6 in dem Sinne unabhängig ist von der Anordnung gemäss Figur 8, dass beide Anordnungen beziehungsweise deren Verfahren nacheinander oder auch gleichzeitig betrieben werden können. Ein gleichzeitiges durchführen beider Verfahren ist möglich, weil mit dem einen Verfahren dem Innenraum der Gaskammer 1h eine Menge Gas zugeführt oder entnommen wird, währen mit dem anderen Verfahren die Gaskammer 1h vorzugsweise von Aussen gekühlt wird. Beide Verfahren sind somit unabhängig voneinander, und falls erforderlich auch gleichzeitig betreibbar.

Zum besseren Verständnis werden die Figuren 7, 8 und 9 nachfolgend nochmals beschrieben.

Die in Figur 7 schematisch dargestellte hydropneumatische Feder-Dämpfungsvorrichtung umfasst ein Hydropelement 1, welche über ein Steuerventil 4b und eine Leitung 10 strömungstechnisch mit einem Dosierzylinder 2 verbunden ist. Das vereinfacht dargestellte Hydropelement 1 umfasst ein vertikal verschiebbares Verbindungsmittel 1a, an dessen unterem Ende ein nicht dargestelltes Rad bzw. Radhalterung befestigt ist. Das Verbindungsmittel 1a ist fest mit einem verschiebbar gelagerten Kolben 1b mit Gehäuseteil verbunden, wobei der Kolben 1b mit Gehäuseteil sowie das feste Gehäuse des Hydropelemente 1 ein Flüssigkeitsvolumen begrenzen, welches ein erstes Teilvolumen 1c sowie ein zweites Teilvolumen 1d aufweist. Das erste Teilvolumen 1c wird auch als erste Kammer, das zweite Teilvolumen 1d als zweite Kämmer bezeichnet. Das erste und zweite Teilvolumen 1c, 1d sind über eine Ausgleichsleitung 1e mit Drossel 1f Fluid leitend verbunden. Das Flüssigkeitsvolumen ist vorzugsweise mit Öl gefüllt. Ein Gasvolumen 1h, auch als dritte Kammer bezeichnet, ist durch das feste Gehäuse des Hydropelementes 1 und einem Trennkolben 1g begrenzt, wobei der verschiebbare Trennkolben 1g das zweite Teilvolumen 1d sowie die Gaskammer 1h begrenzt. Im dargestellten Ausführungsbeispiel ist das Hydropelement 1 mit einem Temperatursensor 6 sowie mit einem Drucksensor 7 versehen, um in der Gaskammer 1h die Temperatur T_{H} sowie den Druck P_{H} des sich darin befindlichen Gases zu messen. Beide Sensoren 6,7 sind über Signalleitungen 6a, 7a mit einer Ansteuerungsvorrichtung 3a verbunden. Es ist eine Vielzahl von Ausführungsformen bekannt um mit dem Temperatursensor 6 die Temperatur des Gases zu messen, wobei die Temperatur beispielsweise direkt mit einem innerhalb der Gaskammer 1h angeordneten Sensor gemessen werden kann, oder beispielsweise auch indirekt, indem nur die Gehäusetemperatur an geeigneter Stelle des Hydropelementes 1 gemessen wird. Der Dosierzylinder 2 umfasst einen verschiebbar gelagerten Dosierkolben 2a, welcher eine Ölkammer 2b von einem mit Gas gefüllten Dosiervolumen 2c trennt. Die Ölkammer 2b ist über ein Steuerventil 5 mit einer Öldruckleitung 9 verbunden. Im dargestellten Ausführungsbeispiel ist der Dosierzylinder 2 mit einem Drucksensor 8 sowie einem Temperatursensor 15 versehen, um im Dosierzylinder 2 die Temperatur sowie den Druck des sich darin befindlichen Gases zu messen. Der Druck kann, beispielsweise während der Fahrt des Kettenfahrzeuges, stark schwanken. Um trotzdem den Druckwert zuverlässig zu messen wird von der Ansteuerungsvorrichtung 3a vorzugsweise während einem bestimmten Zeitabschnitt ein Mittelwert gebildet. Beide Sensoren 8, 15 sowie das Steuerventil 5 sind über Signalleitungen 8a, 15a, 5a mit der Ansteuerungsvorrichtung 3a verbunden. Das Steuerventil 5 kann beispielsweise Mittels einer Zeitsteuerung angesteuert werden, indem das Steuerventil 5 während einer vorgebbaren Zeitdauer geöffnet wird, um derart eine definierte Menge Öl der Ölkammer 2b zu- oder abzuführen. Die in Figur 1 dargestellte Anordnung könnte auch nur einen Temperatursensor 6 oder einen Drucksensor 7 aufweisen, sofern dies genügen würde um ein Korrekturvolumen Vk zu berechnen oder zu bestimmen. Als Gas wird beispielsweise Stickstoff verwendet. Eine Lage- bzw. Längenmesseinrichtung 16 ist über Signalleitungen 16b mit der Ansteuervorrichtung 3a verbunden. Es ist eine Vielzahl von Ausführungsformen für die Lagemessung bekannt. So kann z.B. eine Lagemessung direkt am oder im Hydropelement 1 vorgenommen werden, oder die Lage kann durch Messen des Drehwinkels des Tragarmes bestimmt werden. Es könnte z.B. auch die Höhe des Kettenfahrzeuges ab Boden gemessen werden, und aus diesem Wert die Lage bzw. Länge des Hydropelementes 1 abgeleitet werden. Die Lagemessung 16 zusammen mit einer Druckmessung 7 dient zur Beurteilung der tatsächlichen Kennlinie in Abhängigkeit der Temperatur des Gases entsprechend Fig. 12. Mit der Ansteuervorrichtung 3a und der Dosiervorrichtung 2 kann das Gasvolumen in der Gaskammer 1h derart nachgeführt werden, dass eine vorgegebene Kennlinie gemäss Fig. 12 immer unabhängig von der Temperatur des Gases eingestellt werden kann.

Die in Figur 8 dargestellte Feder-Dämpfungsvorrichtung weist, im Unterschied zu der in Figur 7 dargestellten Feder-Dämpfungsvorrichtung, vier Hydropelemente 1 auf, wobei jedes Hydropelement 1 mit einem Rad 12a, 12b, 12c, 12d verbunden ist, sowie einen Lagensensor 16 und gegebenenfalls einen Temperatursensor 6 und gegebenenfalls einen Drucksensor 7 aufweist. Jedes einzelne Hydropelement 1 kann über ein Steuerventil 4b und eine gemeinsame Speiseleitung 10 mit dem Dosierzylinder 2 verbunden werden. Jedes Hydropelement 1 sowie der Dosierzylinder 2 sind Signal leitend mit der Ansteuerungsvorrichtung 3a verbunden, um die Steuerventile 4b der Hydropelemente 1 sowie den Dosierzylinder 2 durch die Ansteuervorrichtung 3a zu kontrollieren. Ein Fahrzeug könnte beispielsweise zwei, vier, sechs oder acht Räder 12a, 12b, 12c, 12d aufweisen, welche je über ein Hydropelement 1 mit dem Fahrzeugrahmen des Fahrzeuges verbunden sind. So könnte beispielsweise ein geländegängiges Radfahrzeug auf jeder Seite vier in Fahrtrichtung hintereinander angeordnete Räder 12a, 12b, 12c, 12d mit Hydropelementen 1 aufweisen.

Für die Dosieraufgaben an den einzelnen Hydropelementen 1 können auch mehrere Dosiervorrichtungen 2 eingesetzt werden. Bevorzugt hat jedes Hydropelement 1 eine eigene Dosiervorrichtung 2.

Die Lage- bzw. Längenmessung 16 erfolgt bevorzugt für jedes Hydropelement 1 separat. Jede Messvorrichtung 16 ist über eine Signalleitung 16b mit der Ansteuervorrichtung 3a verbunden, wobei in Figur 8 nur eine der Signalleitungen 16b dargestellt ist. In einer einfacheren Ausführungsform genügt aber auch die Lagemessung 16 an wenigstens einem oder zwei Hydropelementen 1, z.B. am in Fahrtrichtung Vordersten oder Hintersten Hydropelement 1. Mit Hilfe dieser Messwerte kann die Lage bzw. Länge der dazwischen angeordneten Hydropelemente 1 durch Interpolation berechnet werden, sodass auch ein ungefährer Wert betreffend der Länge dieser dazwischen angeordneten Hydropelemente 1 zur Verfügung steht, sodass auch diese von der Dosiervorrichtung 2 mit einem Korrekturvolumen Gas Vk versorgt werden können.

Figur 9 zeigt schematisch ein Kettenlaufwerk eines Kettenfahrzeuges, wobei die umlaufende Kette 14 von den Rollen 12a, 12b, 12c, 12d sowie den Umlenkrollen 13a, 13b getragen ist. Die Umlenkrollen 13a, 13b werden bei Kettfahrzeugen auch als Leitrad beziehungsweise Treibrad bezeichnet. Die Rollen 12b, 12c sind über je ein Hydropelement 1 mit einem gemeinsamen Laufwerkträger 17 verbunden und in der dargestellten Richtung verschiebbar gelagert. Die Räder 12a und 12d weisen keine Hydropelemente 1 auf und sind beispielsweise mit einer konventionellen mechanischen Feder mit dem Laufwerkträger 17 verbunden. Die Spannung der Kette 14 kann über die mit den Rollen 12b, 12c verbundenen Hydropelemente 1 beeinflusst werden. In einem weiteren Ausführungsbeispiel könnte beispielsweise nur die Umlenkrolle 13b oder zusätzlich auch die Rollen 12b, 12c mit einem Hydropelement 1 verbunden sein, wobei die Rollen 12b, 12c, 13b in der dargestellten Richtung beweglich gelagert sind, um durch ein Ansteuern der Hydropelemente 1 die Spannung der Kette 14 und/oder die Fahrzeughöhe zu beeinflussen. In einer weiteren Ausführungsform sind alle Rollen 12a,12b,12c,12d jeweils über ein Hydropelement 1 mit dem Laufwerkträger 17 verbunden, wobei zumindest eines der Hydropelemente 1 strömungstechnisch mit einer Dosiervorrichtung 2 verbunden ist und somit der Gaskammer 1h der Hydropelemente 1 ein Kompensationsvolumen zuführbar oder abführbar ist, wogegen die restlichen Hydropelemente 1 keine fluidleitende Verbindung zu einer Dosiervorrichtung 2 aufweisen, sodass der jeweiligen Gaskammer 1h dieser Hydropelemente 1 kein Kompensationsvolumen Vk zuführbar ist und diese Hydropelemente 1 nicht ansteuerbar sind.

In einer vorteilhaften Ausgestaltung umfassen auch diese nicht ansteuerbaren Hydropelemente 1 einen Temperatur- und/oder Drucksensor 6,7 zur Bestimmung der Temperatur und/oder des Druckes des Gases in der jeweiligen Gaskammer 1h. Bei der Berechnung des Kompensationsvolumens für die ansteuerbaren Hydropelemente 1 wird der Zustand der nicht ansteuerbaren Hydropelemente 1 über die Messung von deren Temperatur und/oder Druck berücksichtigt, und das Kompensationsvolumen derart berechnet, dass das Kettenfahrzeug insbesondere eine vorgegebene Höhe und/oder eine vorgegebene Kettenspannung aufweist. In einer weiteren vorteilhaften Ausgestaltung umfasst das Kettenfahrzeug die in den Figuren 5 oder 6 dargestellte Anordnung, und eventuell zusätzlich die in den Figuren 7 und 8 dargestellte Anordnung.

Die erfindungsgemässe hydropneumatische Feder-Dämpfungsvorrichtung weist den Vorteil auf, dass der Wärmetauscher 1i gewährleistet, dass das Hydropelement 1 während dem Betrieb auf einer vorzugsweise konstanten Betriebstemperatur gehalten wird. Es kann sich deshalb als vorteilhaft erweisen, die in den Figuren 7 bis 9 beschriebene Anordnung zum Zu- oder Abführen einer Menge Gas in den Innenraum der Gaskammer 1 h dahingehend zu vereinfachen, dass einfach eine bestimmte Menge Gas der Gaskammer 1h, insbesondere eine vorherbestimmte Menge, zu- oder abgeführt wird. Vorzugsweise wird dabei weder der Druck noch die Temperatur in der Gaskammer 1h gemessen. Die Information des Sensors 16 zur Lagenmessung genügt an sich, um zu entscheiden, ob eine bestimmte Menge Gas der Gaskammer 1h zu- oder abgeführt werden soll. Dies ermöglicht es die in Figur 7 dargestellte Anordnung wesentlich zu vereinfachen. Es kann sich zudem als vorteilhaft erweisen dem ersten oder zweiten Ölkammerteil 1c, 1d eine bestimmte Menge Öl zu- oder abzuführen, um die Charakteristik des Hydropelementes 1 zu verändern, insbesondere um die statische Höhe des Fahrzeuges gegenüber dem Boden entsprechend der Situation anzupassen. Dies kann an Stelle der Zuführung von Gas in die Gaskammer 1h erfolgen. Sowohl das Zuführen von Gas in die Gaskammer 1h als auch das Zuführen von Öl in das erste oder zweite Ölkammerteil 1c, 1d hat zur Folge, dass die Charakteristik des Hydropelementes verändert wird, in dem die Federkennlinie bezüglich der statischen Nulllage angepasst wird. Abhängig von der angestrebten Charakteristik kann mehrmals eine Menge Öl und/oder Gas dem Hydropelement 1 zu- oder abgeführt werden.

Figur 10 zeigt schematisch eine Draufsicht auf ein Fahrzeug, das links und rechts ein Laufwerk 18 aufweist, wobei jedes Laufwerk 18 zumindest ein Hydropelement 1 umfasst, an welchen je ein Rad oder ein Laufrad für eine Kette angeordnet ist. Das Fahrzeug umfasst eine Motorkühlung 24, welche über einen Kühlkreislauf ausbildende Kühlmittelleitungen 24a, 24b mit der Kühlvorrichtung 21 verbunden ist. Die Kühlvorrichtung 21 ist ihrerseits über Kühlmittelleitungen 22a, 22b, beispielsweise wie in den Figuren 5 und 6 dargestellt, mit dem einzelnen Hydropelement 1 verbunden. Eine Ansteuerungsvorrichtung 3 regelt die Kühlung der Hydropelemente 1. Zudem könnte das Fahrzeug auch noch eine Gaskompensationsansteuerungsvorrichtung 3a umfassen, welche wie mit Hilfe der Figuren 7 und 8 beschrieben, der Gaskammer 1h ein Kompensationsvolumen zu- oder abführt.

Figur 11 zeigt ein Ausführungsbeispiel des in Figur 1 vereinfacht dargestellten Hydropelementes 1. Ein Hebelarm 19 ist am Punkt 19a drehbar mit dem gemeinsamen Laufwerkträger 17 verbunden und am Punkt 19c mit dem Rad 12b verbunden. Das Hydropelement 1 ist am Punkt 20 drehbar mit dem gemeinsamen Laufwerkträger 17 verbunden und am Punkt 19b drehbar mit dem Hebelarm 19 verbunden. Somit ist das Rad 12b bezüglich dem gemeinsamen Laufwerkträger 17 in vertikaler Richtung federn gelagert, wobei am Rad 12b eine Kraft F2 angreift, was im Hydropelement 1 eine Reaktionskraft F1 zur Folge hat.

Figur 12 zeigt den Verlauf des Druckes P bzw. der Aufstandskraft F in der Gaskammer 1h des Hydropelementes 1 in Funktion der Länge w bei unterschiedlichen Gastemperaturen T1,T_{R},T3,T4. Dieser Verlauf ist vereinfacht dargestellt. Üblicherweise weist der Zusammenhang zwischen Druck P bzw. Aufstandskraft F und Länge w, auch als Kennlinie bezeichnet, ein Hystereseverhalten auf. Dieser Hystereseeffekt wird nachfolgend nicht berücksichtigt, indem vereinfacht der in Figur 12 dargestellte Zusammenhang angenommen wird. Das erfindungsgemässe Hydropelement mit Kühlvorrichtung erlaubt es das Hydropelement 1 während dem Betrieb auf der Referenztemperatur TR zu halten, sodass das Hydropelement während dem Betrieb eine definierte Federcharakteristik sowie eine definierte Länge aufweist. Das erfindungsgemässe Hydropelement mit Kühlvorrichtung erlaubt es zudem das Hydropelement 1 vor dem Betrieb zu erwärmen, zum Beispiel in dem das Hydropelement 1 während dem Warmlaufen des Fahrzeuges durch Erwärmen des Hydropelementes 1 von der in Figur 12 dargestellten Kurve T1 zur Kurve TR gebracht wird. Falls erforderlich kann der Kurvenverlauf des jeweiligen Hydropelementes 1 zudem über die in den Figuren 7 und 8 dargestellte Gaskompensationsansteuerungsvorrichtung 3a verändert beziehungsweise korrigiert werden

Figur 13 zeigt eine weitere hydropneumatische Feder-Dämpfungsvorrichtung, wobei im Unterschied zu der in Figur 7 dargestellten Ausführungsform dem ersten und/oder zweiten Ölkammerteil 1c,1d zumindest eines Hydropelementes 1 über eine Oldosiervorrichtung 4c ein Ölkompensationsvolumen Vk zu- oder abgeführt wird. Die Öldosiervorrichtung 4c ist strömungstechnisch mit einer Ölzufuhr 9 verbunden. Die Öldosiervorrichtung 4c ist vereinfacht als Ventil dargestellt, wobei die Öldosiervorrichtung 4c vorzugsweise als eine Vorrichtung umfassend einen Kolben und einen Zylinder ausgestaltet ist, damit ein definiertes Ölkompensationsvolumen Vk zu- oder abführbar ist. Die Anordnung wird vorzugsweise derart betrieben, mit einem Sensor 16 zur Positionsbestimmung, insbesondere zum Erfassen der Länge w des Hydropelementes 1 oder der Drehung des Hydropelementes 1 bezüglich einer Referenzlage, die Lage des Hydropelementes 1 oder die Lage des gesamten Fahrzeuges erfasst wird, und dass die Kompensationsansteuerungsvorrichtung 3a derart ausgestaltet ist, dass diese die Öldosiervorrichtung 4c derart ansteuert, dass dem ersten und/oder zweiten Ölkammerteil 1c, 1d ein Ölkompensationsvolumen Vk zu- oder abführbar ist. Dadurch wird die Lage des Hydropelemente 1 beziehungsweise die Lage des gesamten Fahrzeuges verändert, weil das zu- oder abgeführte Ölkompensationsvolumen Vk bewirkt, dass die in Figur 12 dargestellte Kurve verschoben wird. Der auf die Gaskammer 1h des Hydropelementes 1 wirkende Wärmetauscher 1i hat zur Folge, dass das Hydropelement 1 nach dem Aufwärmen in einer vorteilhaften Betriebsweise eine im wesentlichen konstante Temperatur aufweist, sodass die Lage des gesamten Fahrzeuges sehr einfach derart angesteuert werden kann, dass wie in Figur 13 dargestellt, eine Ölkompensationsvolumen Vk dem ersten und/oder zweiten Ölkammerteil 1c, 1d zu- oder abgeführt wird, oder indem, wie in Figur 7 dargestellt, ein Gaskompensationsvolumen Vk der Gaskammer 1h zu- oder abgeführt wird. In einer einfachen Ausführungsform ist es nicht erforderlich das genaue Öl- oder Gaskompensationsvolumen Vk zu kennen, weil das Öl- oder Gaskompensationsvolumen Vk einfach zugeführt werden kann, und, falls danach die mit dem Sensor 16 zur Positionsbestimmung erfasste Lage des Hydropelementes 1 oder des Fahrzeuges vom gewünschten Wert abweicht, ein zusätzliches Öl-oder Gaskompensationsvolumen Vk zu- oder abgeführt werden kann, bis die Position etwa dem gewünschten Wert entspricht. Diese Art der Regelung kann sich auch als vorteilhaft erweisen, wenn das Hydropelement 1 beispielsweise sehr schnell abgekühlt wird, weil das Fahrzeug beispielweise durch Wasser fährt und die Hydropelemente 1 daher stark von aussen gekühlt werden. Sobald der Sensor 16 zur Positionsbestimmung des Hydropelementes 1 oder des Fahrzeuges eine Abweichung von einem Sollwert feststellt, kann diese durch ein zusätzlich zu- oder abgeführtes Öl- oder Gaskompensationsvolumen Vk korrigiert werden, sodass das Fahrzeug auch bei sehr schnell auftretenden Temperaturänderungen eine vorherbestimmte Position im Wesentlichen einhalten kann. Sobald das Fahrzeug das Wasser verlassen hat wird sich das Hydropelement 1 üblicherweise wieder erwärmen, sodass der Sensor 16 zur Positionsbestimmung des Hydropelementes 1 oder des Fahrzeuges eine Abweichung vom Sollwert feststellt wird, und die Lage daher durch ein zusätzlich zu-oder abgeführtes Öl- oder Gaskompensationsvolumen Vk korrigiert werden kann.

Ein Ölkompensationsvolumen Vk kann dem ersten und/oder zweiten Ölkammerteil 1c, 1d beziehungsweise ein Gaskompensationsvolumen Vk kann dem Gasvolumen 1h des Hydropelementes 1 nicht nur dann zugeführt werden, wenn eine Positionsveränderung festgestellt wird. Ebenfalls möglich ist, dass über den Temperatursensor 6 oder den Drucksensor 7 eine zu tiefer oder ein zu hoher Wert festgestellt wird, und dass daraufhin ein Kompensationsvolumen Vk dem ersten und/oder zweiten Ölkammerteil 1c,1d und/oder dem Gasvolumen 1h zu- oder abgeführt wird. Falls ein derartiger zu tiefer oder zu hoher Wert festgestellt wird, so kann in der einfachsten Ausführungsform ein fest vorgegebenes Kompensationsvolumen Vk zu- oder abgeführt werden. In einer anspruchsvolleren Ausführungsform stehen Informationen bezüglich dem Zusammenhang von Temperatur und Kompensationsvolumen Vk beziehungsweise von Druck und Kompensationsvolumen Vk zur Verfügung, zum Beispiel in Form einer Tabelle. Es wird beispielweise die aktuelle Temperatur oder der aktuelle Druck gemessen, wobei eine gewünschte Temperatur oder ein gewünschter Druck vorgegeben ist, sodass auf Grund des aktuellen Wertes und des gewünschten Wertes aus der Tabelle ein Kompensationsvolumen Vk ermittelt werden kann, das zu- oder abgeführt wird. In der einfachsten Ausführungsform ist für dieses Kompensationsverfahren keine Information des Sensors 16 zur Positionsbestimmung erforderlich. In einem weiteren, anspruchsvolleren Verfahren kann natürlich zusätzlich, die Information des Sensors 16 zur Positionsbestimmung verwendet werden, um die genaue Lage des Hydropelementes oder des Fahrzeuges zu bestimmen. Das erfindungsgemässe Verfahren ermöglicht somit eine Vielzahl von Verfahren, um einerseits die Temperatur in Hydropelement vorzugsweise im Wesentlichen konstant oder in einem vorherbestimmten Temperaturbereich zu halten, und um andererseits ein Ölkompensationsvolumen Vk dem ersten und/oder zweiten Ölkammerteil 1c,1d zuzuführen, beziehungsweise um ein Gaskompensationsvolumen Vk dem Gasvolumen 1h des Hydropelementes zuzuführen, um durch diese Massnahmen die Lage des Hydropelementes und/oder die Position des Fahrzeuges zu beeinflussen.

## Patentansprüche

1. Hydropneumatische Feder-Dämpfungsvorrichtung, insbesondere für Radfahrzeuge oder Kettenfahrzeuge, umfassend zumindest ein Hydropelement (1) mit einer Gaskammer (1h), **dadurch gekennzeichnet, dass** das Hydropelement (1) einen Wärmetauscher (1i) umfasst, wobei der Wärmetauscher (1i) derart am Hydropelement (1) angeordnet ist, dass dieser die Temperatur des Gases in der Gaskammer (1h) kühlt, und dass der Wärmetauscher (1i) über einen Kühlkreislauf (22) mit einer Kühlvorrichtung (21) verbindbar ist.

2. Hydropneumatische Feder-Dämpfungsvorrichtung nach Anspruch 1, **dadurch gekennzeichnet, dass** das Hydropelement (1) die Gaskammer (1h) und eine Ölkammer (1c,1d) und eine Drossel (1f) umfasst, und dass die Gaskammer (1h) und / oder die Ölkammer (1c,1d) und/oder die Drossel (1f) mit dem Wärmetauscher (1i) verbunden ist.

3. Hydropneumatische Feder-Dämpfungsvorrichtung nach Anspruch 1 oder 2, umfassend einen Temperatursensor (6) zum Erfassen der Temperatur des Gases in der Gaskammer (1h) und/oder der Temperatur des Kühlmittels im Kühlkreislauf (22), sowie umfassend ein Ventil (4) zum Beeinflussen der dem Wärmetauscher 1(i) zugeführten Kühlmittelmenge, wobei das Ventil (4) vorzugsweise als mechanisches Ventil umfassend einen mechanischen Temperatursensor ausgestaltet ist.

4. Hydropneumatische Feder-Dämpfungsvorrichtung nach Anspruch 1 oder 2, umfassend einen Temperatursensor (6) zum Bestimmen der Temperatur des Gases in der Gaskammer (1h) und/oder der Temperatur des Kühlmittels im Kühlkreislauf (22), sowie umfassend eine Ansteuerungsvorrichtung (3), wobei die Ansteuerungsvorrichtung (3) derart ausgestaltet ist, dass diese einen Messwert des Sensors (6) erfasst, und basierend auf diesem Messwert den Kühlkreislauf (22) derart ansteuert, dass das Gas in der Gaskammer (1h) in einem vorherbestimmten, Temperaturbereich gehalten wird.

5. Hydropneumatische Feder-Dämpfungsvorrichtung nach einem der Ansprüche 2 bis 4, **dadurch gekennzeichnet, dass** der Kühlkreislauf (22) derart ausgestaltet ist, dass zumindest zwei der Hydropelemente (1) individuell kühlbar sind, in Abhängigkeit der vom Temperatursensor (6) des jeweiligen Hydropelementes (1) gemessenen Temperatur.

6. Hydropneumatische Feder-Dämpfungsvorrichtung nach einem der Ansprüche 1 bis 4, **dadurch gekennzeichnet, dass** die Wärmetauscher (1i) einer Mehrzahl von Hydropelementen (1) seriell nacheinander mit dem Kühlkreislauf (22) verbunden sind.

7. Hydropneumatische Feder-Dämpfungsvorrichtung nach einem der Ansprüche 1 bis 4, **dadurch gekennzeichnet, dass** die Wärmetauscher (1i) einer Mehrzahl von Hydropelementen (1) gegenseitig parallel mit dem Kühlkreislauf (22) verbunden sind.

8. Hydropneumatische Feder-Dämpfungsvorrichtung nach Anspruch 6 oder 7, **dadurch gekennzeichnet, dass** die Gesamtheit der mit dem Kühlkreislauf (22) verbundenen Hydropelemente (1) die Kühlvorrichtung (21) ausbildet.

9. Hydropneumatische Feder-Dämpfungsvorrichtung nach einem der vorhergehenden Ansprüche, wobei die Gaskammer (1h) zumindest eines Hydropelementes (1) über ein Steuerventil (4) strömungstechnisch mit einer Dosiervorrichtung (2) verbunden ist, umfassend einen Sensor (16) zur Positionsbestimmung, insbesondere zum Erfassen der Länge (w) des Hydropelementes (1) oder der Drehung des Hydropelementes (1) bezüglich einer Referenzlage, sowie umfassend eine Gaskompensationsansteuerungsvorrichtung (3a), wobei die Gaskompensationsansteuerungsvorrichtung (3a) derart ausgestaltet ist, dass diese die Dosiervorrichtung (2) und das Steuerventil (4) derart ansteuert, dass der Gaskammer (1h) ein Kompensationsvolumen (Vk) zu- oder abführbar ist.

10. Hydropneumatische Feder-Dämpfungsvorrichtung nach einem der Ansprüche 1 bis 8, wobei die Gaskammer (1h) zumindest eines Hydropelementes (1) über ein Steuerventil (4) strömungstechnisch mit einer Dosiervorrichtung (2) verbunden ist, umfassend einen Sensor (7) zur Bestimmung des Druckes des Gases in der Gaskammer (1h), umfassend einen Sensor (16) zur Positionsbestimmung, insbesondere zum Erfassen der Länge (w) des Hydropelementes (1) oder der Drehung des Hydropelementes (1) bezüglich einer Referenzlage, sowie umfassend eine Gaskompensationsansteuerungsvorrichtung (3a), wobei die Gaskompensationsansteuerungsvorrichtung (3a) derart ausgestaltet ist, dass diese die Messwerte der Sensoren (7,16) erfasst, und basierend auf diesen Messwerten die Dosiervorrichtung (2) und das Steuerventil (4) derart ansteuert, dass der Gaskammer (1h) ein Kompensationsvolumen (Vk) zu-oder abführbar ist.

11. Hydropneumatische Feder-Dämpfungsvorrichtung nach einem der Ansprüche 1 bis 8, wobei das erste und/oder zweite Ölkammerteil (1c,1d) zumindest eines Hydropelementes (1) über eine Öldosiervorrichtung (4c) strömungstechnisch mit einer Ölzufuhr (9) verbunden ist, umfassend einen Sensor (16) zur Positionsbestimmung, insbesondere zum Erfassen der Länge (w) des Hydropelementes (1) oder der Drehung des Hydropelementes (1) bezüglich einer Referenzlage, sowie umfassend eine Kompensationsansteuerungsvorrichtung (3a), wobei die Kompensationsansteuerungsvorrichtung (3a) derart ausgestaltet ist, dass diese die Öldosiervorrichtung (4c) derart ansteuert, dass dem ersten und/oder zweiten Ölkammerteil (1c,1d ein Ölkompensationsvolumen (Vk) zu- oder abführbar ist.

12. Hydropneumatische Feder-Dämpfungsvorrichtung nach einem der Ansprüche 1 bis 8, wobei die Gaskammer (1h) zumindest eines Hydropelementes (1) mit einer Gasdosiervorrichtung (2) verbunden ist, und/oder wobei das erste und/oder zweite Ölkammerteil (1c,1d) des zumindest einen Hydropelementes (1) mit eine Öldosiervorrichtung (4c) verbunden ist, und wobei in Abhängigkeit einer gemessenen Temperatur und/oder in Abhängigkeit eines gemessenen Druckes der Gaskammer (1h) und/oder dem ersten und/der dem zweiten Ölkammerteil (1c,1d) ein Kompensationsvolumen Vk zu- oder abführbar ist.

13. Hydropneumatische Feder-Dämpfungsvorrichtung nach einem der vorhergehenden Ansprüche, **dadurch gekennzeichnet, dass** der Wärmetauscher (1i) mit einer Heizvorrichtung verbindbar ist, um die Temperatur des Gases in der Gaskammer (1h) zu erwärmen.

14. Hydropneumatische Feder-Dämpfungsvorrichtung nach einem der vorhergehenden Ansprüche, **dadurch gekennzeichnet, dass** eine elektrische Heizvorrichtung derart angeordnet ist, dass die Gaskammer (1h) beheizbar ist.

15. Verfahren zum Steuern einer hydropneumatischen Feder-Dämpfungsvorrichtung, insbesondere der Feder-Dämpfungsvorrichtung eines Radfahrzeuges oder eines Kettenfahrzeuges, umfassend zumindest ein Hydropelement (1) mit einer Gaskammer (1h), **dadurch gekennzeichnet, dass** die Temperatur des Gases in der Gaskammer (1h) mit Hilfe eines Kühlkreislaufes (22) gekühlt wird.

16. Verfahren nach Anspruch 15, **dadurch gekennzeichnet, dass** zumindest eines der folgenden Komponenten des Hydropelementes (1) gekühlt wird, nämlich Gaskammer (1h), Ölkammer (1c,1d) und Drossel (1f).

17. Verfahren nach Anspruch 15 und 16, **dadurch gekennzeichnet, dass** bei einer kühlen Feder-Dämpfungsvorrichtung die Gaskammer (1h) des Hydropelementes (1) beheizt wird.

18. Verfahren nach einem der Ansprüche 15 bis 17, **dadurch gekennzeichnet, dass** zumindest ein Hydropelement (1) strömungstechnisch mit einer Dosiervorrichtung (2) verbindbar ist, wobei der Druck des Gases in der Gaskammer (1h) des Hydropelementes (1) und die Länge (w) des Hydropelementes (1) gemessen wird, und wobei in Abhängigkeit dieser gemessenen Werte ein Kompensationsvolumen (Vk) der Gaskammer (1h) zu-oder abgeführt wird.

19. Verfahren nach einem der Ansprüche 15 bis 17, **dadurch gekennzeichnet, dass** zumindest ein Hydropelement (1) strömungstechnisch mit einer Öldosiervorrichtung (4c) verbindbar ist, wobei der Gaskammer (1h) ein Kompensationsvolumen (Vk) zu- oder abgeführt wird, und wobei danach mit einem Sensor 16 die Position des Hydropelemente (1) oder des Fahrzeuges gemessen wird, und falls erforderlich ein weiteres Kompensationsvolumen (Vk) zu-oder abgeführt wird.

20. Verfahren nach einem der Ansprüche 15 bis 17, **dadurch gekennzeichnet, dass** zumindest ein Hydropelement (1) strömungstechnisch mit einer Öldosiervorrichtung (4c) verbindbar ist, wobei dem ersten und/oder zweiten Ölkammerteil (1c,1d) ein Kompensationsvolumen (Vk) zu- oder abgeführt wird, und wobei danach mit einem Sensor 16 die Position des Hydropelemente (1) oder des Fahrzeuges gemessen wird, und falls erforderlich ein weiteres Kompensationsvolumen (Vk) zu-oder abgeführt wird.

21. Verfahren nach einem der Ansprüche 15 bis 17, **dadurch gekennzeichnet, dass** eine Temperatur des Hydropelementes (1) gemessen wird und/oder dass ein Druck des Hydropelement (1) gemessen wird, und dass dem Hydropelement (1) in Abhängigkeit der gemessenen Temperatur und/oder des gemessenen Drucks ein Gaskompensationsvolumen (Vk) zu-oder abgeführt wird, und/oder dem ersten und/oder zweiten Ölkammerteil (1c,1d) ein Ölkompensationsvolumen (Vk) zu-oder abgeführt wird.

22. Fahrzeug umfassend eine hydropneumatische Feder-Dämpfungsvorrichtung nach einem der Ansprüche 1 bis 14 oder betrieben nach einem Verfahren der Ansprüche 15 bis 21, **dadurch gekennzeichnet, dass** das Fahrzeug eine Motorkühlung aufweist, deren Kühlleistung zumindest so gross ist, dass die gesamte, von der hydropneumatischen Feder-Dämpfungsvorrichtung erzeugbare Wärmeleistung.

23. Fahrzeug nach Anspruch 22, **dadurch gekennzeichnet, dass** die Motorkühlung des Fahrzeuges eine Kühlleistung aufweist, die zumindest 5 mal so gross ist wie die gesamte, von der hydropneumatischen Feder-Dämpfungsvorrichtung erzeugbare Wärmeleistung.

## Claims

1. A hydropneumatic spring-damping device, in particular for wheeled or track vehicles, comprising at least one Hydrop element (1) having a gas chamber (1 h), **characterised in that** the Hydrop element (1) comprises a heat exchanger (1i), wherein the heat exchanger (1i) is arranged on the Hydrop element (1) in such a manner that said heat exchanger cools the temperature of the gas in the gas chamber (1 h), and that the heat exchanger (1i) can be connected to a cooling device (21) via a cooling circuit (22).

2. The hydropneumatic spring-damping device according to Claim 1, **characterised in that** the Hydrop element (1) comprises the gas chamber (1h) and an oil chamber (1c, 1d) and a throttle (1f), and that the gas chamber (1 h) and/or the oil chamber (1 c, 1 d) and/or the throttle (1f) is connected to the heat exchanger (1 i).

3. The hydropneumatic spring-damping device according to Claim 1 or 2, comprising a temperature sensor (6) for detecting the temperature of the gas in the gas chamber (1 h) and/or the temperature of the coolant in the cooling circuit (22), and comprising a valve (4) for controlling the amount of coolant supplied to the heat exchanger (1 i), wherein the valve (4) is preferably in the form of a mechanical valve comprising a mechanical temperature sensor.

4. The hydropneumatic spring-damping device according to Claim 1 or 2, comprising a temperature sensor (6) for determining the temperature of the gas in the gas chamber (1 h) and/or the temperature of the coolant in the cooling circuit (22), and comprising an actuating device (3), wherein the actuating device (3) is designed such that it detects a measurement value of the sensor (6) and, based on said measurement value, actuates the cooling circuit (22) in such a manner that the gas in the gas chamber (1 h) is kept within a previously defined temperature range.

5. The hydropneumatic spring-damping device according to any one of Claims 2 to 4, **characterised in that** the cooling circuit (22) is designed such that at least two of the Hydrop elements (1) can be cooled individually, depending on the temperature measured by the temperature sensor (6) of the respective Hydrop element (1).

6. The hydropneumatic spring-damping device according to any one of Claims 1 to 4, **characterised in that** the heat exchangers (1 i) of a plurality of Hydrop elements (1) are connected in series one after the other to the cooling circuit (22).

7. The hydropneumatic spring-damping device according to any one of Claims 1 to 4, **characterised in that** the heat exchangers (1 i) of a plurality of Hydrop elements (1) are connected in parallel to one another to the cooling circuit (22).

8. The hydropneumatic spring-damping device according to Claim 6 or 7, **characterised in that** all the Hydrop elements (1) connected to the cooling circuit (22) form the cooling device (21).

9. The hydropneumatic spring-damping device according to any one of the preceding claims, wherein the gas chamber (1 h) of at least one Hydrop element (1) is flow-connected via a control valve (4) to a dosing device (2), comprising a sensor (16) for determining position, in particular for detecting the length (w) of the Hydrop element (1) or the rotation of the Hydrop element (1) in relation to a reference position, and comprising a gas compensation actuation device (3a), wherein the gas compensation actuation device (3a) is designed such that it actuates the dosing device (2) and the control valve (4) in such a manner that a compensation volume (Vk) can be supplied to or discharged from the gas chamber (1 h).

10. The hydropneumatic spring-damping device according to any one of Claims 1 to 8, wherein the gas chamber (1 h) of at least one Hydrop element (1) is flow-connected via a control valve (4) to a dosing device (2), comprising a sensor (7) for determining the pressure of the gas in the gas chamber (1 h), comprising a sensor (16) for determining position, in particular for detecting the length (w) of the Hydrop element (1) or the rotation of the Hydrop element (1) in relation to a reference position, and comprising a gas compensation actuation device (3a), wherein the gas compensation actuation device (3a) is designed such that it detects the measurement values of the sensors (7, 16) and, based on said measurement values, actuates the dosing device (2) and the control valve (4) in such a manner that a compensation volume (Vk) can be supplied to or discharged from the gas chamber (1 h).

11. The hydropneumatic spring-damping device according to any one of Claims 1 to 8, wherein the first and/or second oil chamber part (1 c, 1 d) of at least one Hydrop element (1) is flow-connected via an oil-dosing device (4c) to an oil supply (9), comprising a sensor (16) for determining position, in particular for detecting the length (w) of the Hydrop element (1) or the rotation of the Hydrop element (1) in relation to a reference position, and comprising a gas compensation actuation device (3a), wherein the gas compensation actuation device (3a) is designed such that it actuates the oil-dosing device (4c) in such a manner that an oil compensation volume (Vk) can be supplied to or discharged from the first and/or second oil chamber part (1 c, 1 d).

12. The hydropneumatic spring-damping device according to any one of Claims 1 to 8, wherein the gas chamber (1 h) of at least one Hydrop element (1) is connected to a gas-dosing device (2), and/or wherein the first and/or second oil chamber part (1 c, 1d) of the at least one Hydrop element (1) is connected to an oil-dosing device (4c), and wherein a compensation volume Vk can be supplied to or discharged from the gas chamber (1 h) and/or the first and/or second oil chamber part (1 c, 1 d) depending on a measured temperature and/or depending on a measured pressure.

13. The hydropneumatic spring-damping device according to any one of the preceding claims, **characterised in that** the heat exchanger (1 i) can be connected to a heating device in order to heat the temperature of the gas in the gas chamber (1 h).

14. The hydropneumatic spring-damping device according to any one of the preceding claims, **characterised in that** an electric heating device is arranged such that the gas chamber (1 h) can be heated.

15. A method for controlling a hydropneumatic spring-damping device, in particular the spring-damping device of a wheeled or track vehicle, comprising at least one Hydrop element (1) having a gas chamber (1 h), **characterised in that** the temperature of the gas in the gas chamber (1 h) is cooled with the aid of a cooling circuit (22).

16. The method according to Claim 15, **characterised in that** at least one of the following components of the Hydrop element (1) is cooled: gas chamber (1 h), oil chamber (1c, 1d) and throttle (1f).

17. The method according to Claims 15 and 16, **characterised in that** the gas chamber (1 h) of the Hydrop element (1) is heated when the spring-damping device is cool.

18. The method according to any one of Claims 15 to 17, **characterised in that** at least one Hydrop element (1) can be flow-connected to a dosing device (2), wherein the pressure of the gas in the gas chamber (1 h) of the Hydrop element (1) and the length (w) of the Hydrop element (1) are measured, and wherein a compensation volume (Vk) is supplied to or discharged from the gas chamber (1 h) depending on said measured values.

19. The method according to any one of Claims 15 to 17, **characterised in that** at least one Hydrop element (1) can be flow-connected to an oil-dosing device (4c), wherein a compensation volume (Vk) can be supplied to or discharged from the gas chamber (1 h), and wherein the position of the Hydrop element (1) or of the vehicle is then measured with a sensor (16), and a further compensation volume (Vk) is supplied or discharged if necessary.

20. The method according to any one of Claims 15 to 17, **characterised in that** at least one Hydrop element (1) can be flow-connected to an oil-dosing device (4c), wherein a compensation volume (Vk) can be supplied to or discharged from the first and/or second oil chamber part (1 c, 1 d), and wherein the position of the Hydrop element (1) or of the vehicle is then measured with a sensor (16), and a further compensation volume (Vk) is supplied or discharged if necessary.

21. The method according to any one of Claims 15 to 17, **characterised in that** a temperature of the Hydrop element (1) is measured and/or that a pressure of the Hydrop element (1) is measured, and that a gas compensation volume (Vk) is supplied to or discharged from the Hydrop element (1), and/or an oil compensation volume (Vk) is supplied to or discharged from the first and/or second oil chamber part (1c, 1d), depending on the measured temperature and/or on the measured pressure.

22. A vehicle comprising a hydropneumatic spring-damping device according to any one of Claims 1 to 14 or operated using a method according to any one of Claims 15 to 21, **characterised in that** the vehicle has an engine-cooling system, the cooling power of which is at least equal to the total heating power that can be generated by the hydropneumatic spring-damping device.

23. The vehicle according to Claim 22, **characterised in that** the engine-cooling system of the vehicle has a cooling power at least 5 times greater than the total heating power that can be generated by the hydropneumatic spring-damping device.

## Revendications

1. Dispositif hydropneumatique à ressort-amortisseur, en particulier pour véhicules à roues ou véhicules à chenilles, comprenant au moins un élément hydropneumatique (1) avec une chambre à gaz (1 h), **caractérisé en ce que** l'élément hydropneumatique (1) comprend un échangeur de chaleur (1 i), l'échangeur de chaleur (1 i) étant disposé sur l'élément hydropneumatique (1) de telle sorte que celui-ci refroidit la température du gaz dans la chambre à gaz (1 h) et **en ce que** l'échangeur de chaleur (1 i) peut être relié par un circuit de refroidissement (22) à un dispositif de refroidissement (21).

2. Dispositif hydropneumatique à ressort-amortisseur selon la revendication 1 **caractérisé en ce que** l'élément hydropneumatique (1) comprend la chambre à gaz (1 h) et une chambre à huile (1 c, 1 d) et un restricteur (1f) et **en ce que** la chambre à gaz (1 h) et/ou la chambre à huile (1c, 1d) et/ou le restricteur (1f) est relié à l'échangeur de chaleur (1 i).

3. Dispositif hydropneumatique à ressort-amortisseur selon la revendication 1 ou 2 comprenant un capteur de température (6) pour saisir la température du gaz dans la chambre à gaz (1 h) et/ou la température du réfrigérant dans le circuit de refroidissement (22), comprenant également une soupape (4) pour influencer les quantités de réfrigérant acheminées à l'échangeur de chaleur (1 i), la soupape (4) étant constituée de préférence comme une soupape mécanique comprenant un capteur de température mécanique.

4. Dispositif hydropneumatique à ressort-amortisseur selon la revendication 1 ou 2 comprenant un capteur de température (6) pour déterminer la température du gaz dans la chambre à gaz (1 h) et/ou la température du réfrigérant dans le circuit de refroidissement (22), comprenant également un dispositif de commande (3), le dispositif de commande (3) étant constitué de telle sorte que celui-ci saisit une valeur de mesure du capteur (6) et en se basant sur cette valeur de mesure pilote le circuit de refroidissement (22) de telle sorte que le gaz dans la chambre à gaz (1 h) est maintenu dans une gamme de températures préalablement définie.

5. Dispositif hydropneumatique à ressort-amortisseur selon l'une quelconque des revendications 2 à 4 **caractérisé en ce que** le circuit de refroidissement (22) est constitué de telle sorte qu'au moins deux éléments hydropneumatiques (1) peuvent être individuellement refroidis en fonction de la température mesurée par le capteur de température (6) de l'élément hydropneumatique (1) respectif.

6. Dispositif hydropneumatique à ressort-amortisseur selon l'une quelconque des revendications 1 à 4 **caractérisé en ce que** les échangeurs de chaleur (1 i) d'une pluralité d'éléments hydropneumatiques (1) sont reliés l'un derrière l'autre en série au circuit de refroidissement (22).

7. Dispositif hydropneumatique à ressort-amortisseur selon l'une quelconque des revendications 1 à 4 **caractérisé en ce que** les échangeurs de chaleur (1 i) d'une pluralité d'éléments hydropneumatiques (1) sont reliés réciproquement parallèlement au circuit de refroidissement (22).

8. Dispositif hydropneumatique à ressort-amortisseur selon la revendication 6 ou 7 **caractérisé en ce que** la totalité des éléments hydropneumatiques (1) reliés au circuit de refroidissement (22) constitue le dispositif de refroidissement (21).

9. Dispositif hydropneumatique à ressort-amortisseur selon l'une quelconque des revendications précédentes, la chambre à gaz (1 h) d'au moins un élément hydropneumatique (1) étant reliée par une soupape de commande (4), conformément à la technique d'écoulement, à un dispositif de dosage (2), comprenant un capteur (16) pour déterminer la position, en particulier pour saisir la longueur (w) de l'élément hydropneumatique (1) ou la rotation de l'élément hydropneumatique (1) par rapport à une position de référence, comprenant également un dispositif de commande de compensation du gaz (3a), le dispositif de commande de compensation du gaz (3a) étant constitué de telle sorte que celui-ci pilote le dispositif de dosage (2) et la soupape de commande (4) de telle manière qu'un volume de compensation (Vk) peut être acheminé à ou évacué de la chambre à gaz (1 h).

10. Dispositif hydropneumatique à ressort-amortisseur selon l'une quelconque des revendications 1 à 8, la chambre à gaz (1 h) d'au moins un élément hydropneumatique (1) étant reliée par une soupape de commande (4), conformément à la technique d'écoulement, à un dispositif de dosage (2), comprenant un capteur (7) pour déterminer la pression du gaz dans la chambre à gaz (1 h), comprenant un capteur (16) pour déterminer la position, en particulier pour saisir la longueur (w) de l'élément hydropneumatique ou la rotation de l'élément hydropneumatique (1) par rapport à une position de référence, comprenant également un dispositif de commande de compensation du gaz (3a), le dispositif de commande de compensation du gaz (3a) étant constitué de telle sorte que celui-ci saisit les valeurs de mesure des capteurs (7, 16) et en se basant sur ces valeurs de mesure pilote le dispositif de dosage (2) et la soupape de commande (4) de telle manière qu'un volume de compensation (Vk) peut être acheminé à ou évacué de la chambre à gaz (1 h).

11. Dispositif hydropneumatique à ressort-amortisseur selon l'une quelconque des revendications 1 à 8, la première et/ou deuxième partie de la chambre d'huile (1 c, 1 d) d'au moins un élément hydropneumatique (1) étant reliée par un dispositif de dosage d'huile (4c), conformément à la technique d'écoulement, à une alimentation d'huile (9), comprenant un capteur (16) pour déterminer une position, en particulier pour saisir la longueur (w) de l'élément hydropneumatique (1) ou la rotation de l'élément hydropneumatique (1) par rapport à une position de référence, comprenant également un dispositif de commande de compensation (3a), le dispositif de commande de compensation (3a) étant constitué de telle sorte que celui-ci pilote le dispositif de dosage d'huile (4c) de telle manière qu'un volume de compensation d'huile (Vk) peut être acheminé à ou évacué de la première et/ou deuxième partie de la chambre d'huile (1 c, 1 d).

12. Dispositif hydropneumatique à ressort-amortisseur selon l'une quelconque des revendications 1 à 8, la chambre à gaz (1 h) d'au moins un élément hydropneumatique (1) étant reliée à un dispositif de dosage de gaz (2), et/ou la première et/ou deuxième partie de la chambre d'huile (1 c, 1 d) d'au moins un élément hydropneumatique (1) étant reliée à un dispositif de dosage d'huile (4c) et un volume de compensation (Vk) pouvant être acheminé à ou évacué de la chambre à gaz (1 h) et/ou de la première et/ou deuxième partie de la chambre d'huile (1 c, 1 d) en fonction d'une température mesurée et/ou en fonction d'une pression mesurée.

13. Dispositif hydropneumatique à ressort-amortisseur selon l'une quelconque des revendications précédentes **caractérisé en ce que** l'échangeur de chaleur (1 i) peut être relié à un dispositif de chauffage pour réchauffer la température du gaz dans la chambre à gaz (1 h).

14. Dispositif hydropneumatique à ressort-amortisseur selon l'une quelconque des revendications précédentes **caractérisé en ce qu'**un dispositif de chauffage électrique est disposé de telle sorte que la chambre à gaz (1 h) peut être chauffée.

15. Méthode pour piloter un dispositif hydropneumatique à ressort-amortisseur, en particulier le dispositif hydropneumatique à ressort-amortisseur d'un véhicules à roues ou d'un véhicule à chenilles, comprenant au moins un élément hydropneumatique (1) avec une chambre à gaz (1) **caractérisé en ce que** la température du gaz dans la chambre à gaz (1 h) est refroidie à l'aide d'un circuit de refroidissement (22).

16. Méthode selon la revendication 15 **caractérisée en ce qu'**au moins un des composants suivants de l'élément hydropneumatique (1) est refroidi, notamment la chambre à gaz (1 h), la chambre à huile (1c, 1d) et le restricteur (1f).

17. Méthode selon la revendication 15 et 16 **caractérisée en ce que** pour un dispositif à ressort amortisseur froid, la chambre à gaz (1 h) de l'élément hydropneumatique (1) est chauffée.

18. Méthode selon l'une quelconque des revendications 15 à 17 **caractérisé en ce qu'**au moins un élément hydropneumatique (1) peut être relié, conformément à la technique d'écoulement, à un dispositif de dosage (2), la pression du gaz dans la chambre à gaz (1 h) de l'élément hydropneumatique (1) et la longueur (w) de l'élément hydropneumatique (1) étant mesurées et un volume de compensation (Vk) de la chambre à gaz (1 h) pouvant être acheminé à ou évacué de la chambre à gaz (1 h) en fonction de ces valeurs mesurées.

19. Méthode selon l'une quelconque des revendications 15 à 17 **caractérisé en ce qu'**au moins un élément hydropneumatique (1) peut être relié, conformément à la technique d'écoulement, à un dispositif de dosage d'huile (4c), un volume de compensation (Vk) de la chambre à gaz (1 h) pouvant être acheminé à ou évacué de la chambre à gaz (1 h) et la position de l'élément hydropneumatique (1) ou du véhicule étant ensuite mesurée avec un capteur (16), et, si nécessaire, un autre volume de compensation pouvant être acheminé ou évacué.

20. Méthode selon l'une quelconque des revendications 15 à 17 **caractérisé en ce qu'**au moins un élément hydropneumatique (1) peut être relié, conformément à la technique d'écoulement, à un dispositif de dosage d'huile (4c), un volume de compensation (Vk) pouvant être acheminé à ou évacué de la première et/ou deuxième partie de la chambre à huile (1c,1d) et la position de l'élément hydropneumatique (1) ou du véhicule étant ensuite mesurée avec un capteur (16), et, si nécessaire, un autre volume de compensation (Vk) pouvant être acheminé ou évacué.

21. Méthode selon l'une quelconque des revendications 15 à 17 **caractérisé en ce qu'**une température de l'élément hydropneumatique (1) est mesurée et/ou **en ce qu'**une pression de l'élément hydropneumatique (1) est mesurée et **en ce qu'**un volume de compensation (Vk) peut être acheminé à ou évacué de l'élément hydropneumatique (1) et/ou un volume de compensation d'huile (Vk) peut être achéminé ou évacué de la première et/ou deuxième partie de chambre d'huile (1 c, 1 d) en fonction de la température mesurée et/ou en fonction de la pression mesurée.

22. Véhicule comprenant un dispositif hydropneumatique à ressort-amortisseur selon l'une quelconque des revendications 1 à 14 ou utilisé selon une méthode selon les revendications 15 à 21 **caractérisé en ce que** le véhicule comporte un refroidissement du moteur dont la puissance de refroidissement est au moins aussi grande que toute la puissance calorifique pouvant être produite par le dispositif hydropneumatique à ressort-amortisseur.

23. Véhicule selon la revendication 22 **caractérisé en ce que** le refroidissement du moteur du véhicule comporte une puissance de refroidissement qui est au moins 5 fois aussi grande que toute la puissance calorifique pouvant être produite par le dispositif hydropneumatique à ressort-amortisseur.
